# EUROPÄISCHE PATENTSCHRIFT

(11) **EP 0 628 654 B1**
(45) Veröffentlichungstag und Bekanntmachung des Hinweises auf die Patenterteilung: **02.12.1998**
(21) Anmeldenummer: 94105627.7
(22) Anmeldetag: 12.04.1994
(51) Int. Cl.: D06F 58/06

(54) **Wäschetrockner mit horizontal drehbar gelagerter Wäschetrommel**
Laundry drier with a horizontally rotatable laundry drum on bearings
Séchoir à linge avec tambour à roulement tournant horizontalement

(30) Priorität: 07.06.1993 DE 4318897
(43) Veröffentlichungstag der Anmeldung: 14.12.1994
(73) Patentinhaber: BSH Bosch und Siemens Hausgeräte GmbH, 81669 München (DE)
(72) Erfinder: Heyder, Reinhard, Dipl.-Ing., D-13409 Berlin (DE)

(56) Entgegenhaltungen:
- EP-A- 0 344 452
- DE-U- 8 510 620
- US-A- 3 218 732
- US-A- 3 457 656
- US-A- 3 483 632

## Beschreibung

Die Erfindung geht aus von einem Wäschetrockner mit wenigstens annähernd horizontal drehbar gelagerter Wäschetrommel, deren wenigstens einer Trommelboden über einen an der mit dem Gehäuse des Wäschetrockners verbundenen Rückwand befestigten Lagerzapfen gelagert ist, dessen lagerrelevante Fläche eine Kugelfläche ist, und wenigstens eine die Kugelfläche dicht umschmiegende Lagerschale aufweist.

Durch das deutsche Gebrauchsmuster 78 11 868 ist ein Wäschetrockner bekannt, dessen rückwärtige Trommellagerung aus einem fest mit dem Trommelboden verbundenen Zapfen und einer fest mit der Rückwand verbundenen Buchse besteht. Als Besonderheit enthält der bekannte Wäschetrockner einen koaxial durch den Lagerzapfen dringenden Kontaktstift zwischen einer galvanisch leitenden Beschichtung einer die Lagerstelle innerhalb der Wäschetrommel abdeckenden Kappe und einer außerhalb der Wäschetrommel isoliert an der Rückwand befestigten Kontakffeder. Hierdurch soll das elektrische Abtasten von feuchten Wäscheteilen innerhalb der Wäschetrommel ermöglicht werden.

Das Biegemoment wird bei dieser Lagertechnik von der rotierenden Trommelrückwand aufgenommen. Diese unterliegt daher im Betrieb einer umlaufenden Biegung. Das dünne Blech der Trommelrückwand kann daher geschädigt werden. Um solche Biegemomente zu mildern und die Trommelrückwand vor Schädigung zu schützen, sind die Trommelrückwände durch Flansche aus dickem Blech verstärkt worden. Lagerzapfen, Flansch und Trommel bestehen aus Stahl und sind fest miteinander verbunden, so daß die im Lager entstehenden Geräusche über die Trommel ungedämpft nach außen geleitet werden.

Demgegenüber ist ein Wäschetrockner gemäß dem einleitenden Oberbegriff aus US 3 483 632 bekannt, der die vorstehend beschriebenen Biegebeanspruchungen vermeidet. Allerdings ist in dem bekannten Wäschetrockner keine Maßnahme zum Ableiten der beim elektrischen Abtasten aufgenommenen elektrischen Größen über die Lagerelemente vorgesehen. Außerdem ist die Montage der Wäschetrommel des bekannten Wäschetrockners schwierig, weil die Kugel und der Lagerzapfen vor der Montage als getrennte Bauteile vorliegen. Daher muß zur Montage beim Einsetzen der Trommel darauf geachtet werden, daß die in der Trommel sitzende Kugel auf den Gewindeschaft des Lagerzapfens trifft. Ferner muß dann an der tief in der Trommel liegenden Montagestelle eine Beilagscheibe und eine Mutter auf den Gewindeschaft gelegt und angezogen werden. Anschließend ist diese Montagestelle sogar noch durch eine Abdeckung an der Innenseite des Trommelbodens zu verschließen.

Der Erfindung liegt die Aufgabe zugrunde, eine Lagerung für einen Wäschetrockner anzugeben, die unter Beibehaltung der Vorzüge des Standes der Technik, den toleranzbedingten Höhenunterschied zwischen vorderer und hinterer Lagerung so auszugleichen, daß ein Verkanten in der hinteren Lagerung nicht mehr möglich ist und daß die hierdurch bedingten Geräusche und vorzeitigen Verschleiß verursachende Belastungen sowie die umlaufende Biegung in der Trommelrückwand vermieden werden, eine einfach zu montierende Kontruktion zeigt, in die auf einfache Weise elektrische Verbindungsteile zum Abgreifen elektrischer Meßparameter aus der feuchten Wäsche integriert werden können.

Erfindungsgemäß wird diese Aufgabe dadurch gelöst, daß die Lagerschale des Trommelbodens zweiteilig ist, deren zum Lagerzapfen gerichtetes Teil eine ringförmig den Zapfen umschließende Kugelringfläche bildet und über ringförmige Flansche an beiden Teilen mit dem trommeleinwärts gerichteten Teil und zugleich mit dem Trommelboden verbunden ist. Hierdurch wird der durch den bekannten Wäschetrockner bereits erzielte Ausgleich von umlaufenden Pendelungen des Lagerzapfens durch Bewegungen zwischen den Kugelflächen des Lagerzapfens und der Lagerschale beibehalten, ohne daß weitere Kräfte auf den Trommelboden oder die Rückwand einwirken können und daß zusätzliche Geräusche und Verschleiß verursachende Verkantungen zu befürchten sind. Vor allem hat die angegebene Konstruktion gegenüber dem bekannten Wäschetrockner aber den Vorteil, daß das bodenseitige Trommellager gleichfalls geeignet ist, axiale Kräfte - etwa durch die trommelvorderseitige Lagerung verursacht - aufzunehmen, und daß es es viel leichter montierbar ist. Dazu können nämlich auf einfachste Weise alle lagerrelevanten Teile vor dem Einsetzen der Trommel am Trommelboden montiert werden. Zur Endmontage des Lagers ist jetzt lediglich die vormontierte Trommel in das Gehäuse einzuführen, bis der Lagerzapfen die dafür vorgesehene Bohrung in der Gehäuserückwand durchdringt, und eine Mutter auf den Gewindeschaft des Lagerzapfens aufzuschrauben.

Wenn gemäß einer Weiterbildung der Erfindung die Trommel auf der dem Boden gegenüberliegenden Seite ein Lager aufweist, das auch axiale Kräfte aus der Richtung des Kugelkalottenlagers des Bodens aufnimmt, kann die Lagerschale des Trommelbodens offen gestaltet sein, so daß sich die Kugelfläche des Lagerzapfens ohne Teilung der Lagerschale in diese einsetzen läßt. Dies vereinfacht die Montage und die Wartung.

Die Verbindung der Lagerflansche untereinander und mit dem Trommelboden kann in fertigungstechnisch besonders einfacher Weise aus stiftartigen Verbindungselementen (Niete, Schrauben oder dgl.) hergestellt werden.

Damit ein erfindungsgemäß ausgestaltetes Trommellager auch eine galvanische Verbindung zwischen den zumeist aus isolierenden Kunststoffen bestehenden Lagerteilen und einer außen angebrachten Verbindungsfeder geeignet ist, kann die Erfindung dadurch vorteilhaft weitergebildet werden, daß die Verbindungselemente eine Ringscheibe am Flansch des zum Lagerzapfen gerichteten Teils befestigen, die im Schleifkontakt mit einer mit dem Lagerzapfen verbundenen Kontakffeder steht.

Eine andere vorteilhafte Weiterbildung der Erfindung dieser Art ist darin zu sehen, daß in dem Flansch des trommeleinwärts angeordneten Teils eine Kontakffeder eingebaut ist, die einerseits mit dem Trommelboden und andererseits mit einem Kontaktstift galvanische Verbindung hat, der mittels einer Feder zwischen dem Grund eines im Zapfen koaxial angeordneten, metallischen Sacklochs und einer Stützpfanne der Kontakffeder eingespannt ist.

Eine dritte Variante für die vorteilhafte Weiterbildung der Erfindung zur Eignung der galvanischen Verbindung aus der Trommel besteht darin, daß mit dem Lagerzapfen eine Kontaktstift-Führung fest verbunden ist, deren federbelasteter Kontaktstift auf einer Kreisbahn außerhalb des Flansches des zum Lagerzapfen gerichteten Teils mit dem Trommelboden galvanischen Kontakt hat.

Die erfindungsgemäße Ausbildung der Trommellagerung in allen Einzelheiten vermeidet ein Verkanten im Lager. Hierdurch kann zusätzlich eine unnötige Geräuschbildung vermieden werden. Außerdem wird ein Rest des Biegemoments von der Trommelrückwand in die Geräterückwand verlagert. Hier tritt das Biegemoment jedoch nur noch als statisch wirkendes Moment auf und kann von der wesentlich dickeren und steiferen Geräterückwand besser aufgefangen werden. Die für das Lager verwendeten Kunststoffelemente vermeiden zusätzlich bzw. dämpfen im Lager noch entstehende Geräusche. Das Lager ist auf einfachste Weise an der noch frei vor dem Monteur liegenden Trommel anbaubar. Beim Einführen der Trommel ins Maschinengehäuse liegt die Montagebohrung für den Lagerzapfen voll im Blickfeld des Monteurs, ohne sich besonderen Einblick etwa in die dunkle Trommelhöhlung verschaffen zu müssen. Auch das Aufschrauben der Mutter auf den Lagerzapfen macht keine Mühe, weil das Zapfenende frei vor dem Monteur liegt.

Anhand der in der Zeichnung dargestellten Ausführungsbeispieles ist die Erfindung nachstehend erläutert.

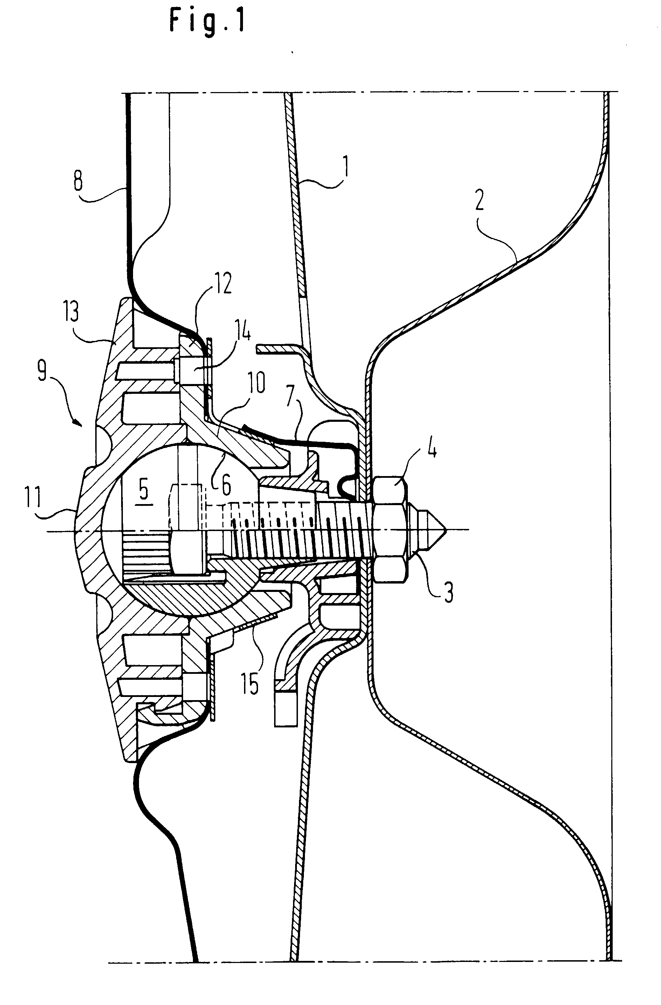

In den Figuren 1 bis 3 der Zeichnung sind die Lagerungsbereiche dreier Ausführungsbeispiele für eine Trommellagerung mit jeweils die Kunststoffteile der Lagerung überbrückender, galvanischer Verbindung im Schnitt dargestellt.

Die Rückwand 1 ist mit dem Gehäuse 2 des Wäschetrockners im Bereich der Lagerung dadurch fest verbunden, daß der für die Lagerung vorgesehene Zapfen 3 zusammen mit seiner Sechskantmutter 4 die Bleche für die Rückwand 1 und das Gehäuse 2 zusammenfügt. Damit ist der Lagerzapfen 3 bereits als feststehender Lagerzapfen definiert. Er trägt an seinem der Trommel zugewandten Ende einen Lagerkopf 5, der auf einem Teil seiner Außenfläche eine Kugelfläche 6 trägt. In die Befestigung der Rückwand 1 und des Gehäusebleches 2 ist noch eine Kontaktfeder 7 eingefügt, die mit den Blechen für die Rückwand und das Gehäuse 2 galvanischen Kontakt hat.

Der Trommelboden 8 ist im Bereich der Lagerung topfförmig nach außen getulpt und nimmt in der daraus gebildeten Vertiefung eine zweiteilige Lagerschale 9 auf. Das zum Lagerzapfen 3 gerichtete Teil 10 bildet auf seiner Innenseite eine ringförmig den Kugelkopf 5 des Zapfens 3 umschließende Kugelringfläche, die mit der Kugelfläche 6 des Lagerkopfes 5 korrespondiert. Das trommeleinwärts angeordnete Teil 11 der Lagerschale 9 überdeckt die topfförmige Vertiefung des Trommelbodens 8 und trägt an seiner Innenseite den supplementären Teil der den Lagerkopf 5 umschmiegenden Kugelinnenfläche. Beide Teile 10 und 11 haben je einen ringförmigen Flansch 12 und 13, die mit nicht näher dargestellten Verbindungselementen 14 untereinander und zugleich mit dem Trommelboden 8 verbunden sind. In die Verbindung ist außerdem ein topfförmiger Schleifring 15 einbezogen, der trotz der Drehbewegung der Trommel 8 und des Schleifringes 15 mit der Kontaktfeder 7 in ständiger galvanischer Verbindung steht.

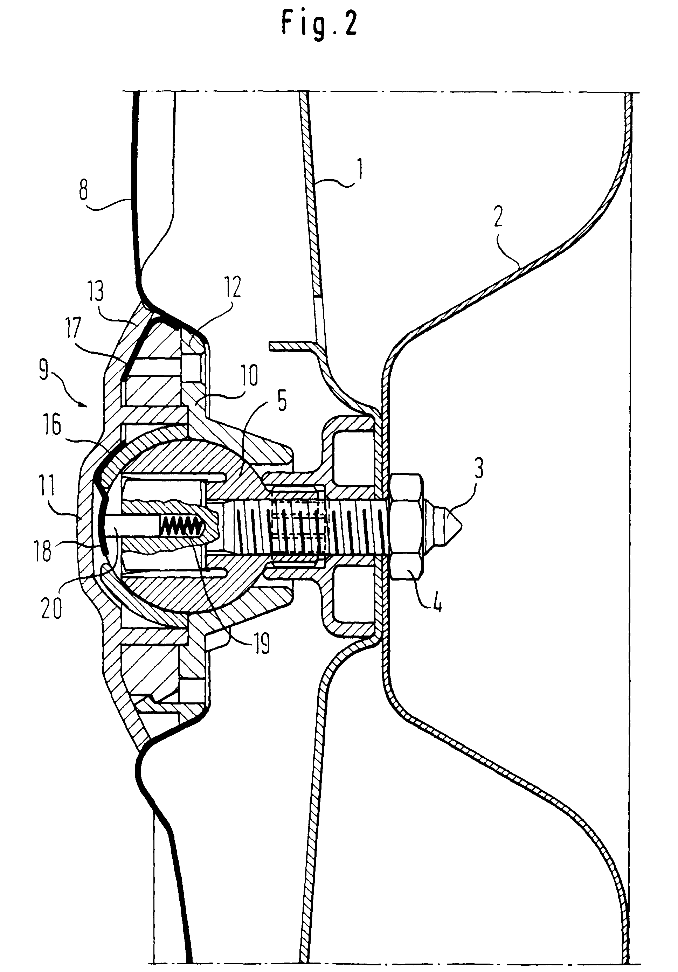

Das in Figur 2 dargestellte Beispiel ist im wesentlichen gleich aufgebaut wie das Beispiel der Figur 1. Lediglich das trommeleinwärts angeordnete Teil 11 der Lagerschale 9 ist selbst auch noch zweiteilig ausgebildet. Das den Flansch 13 tragende Teil ist nur als Tragteil für die Lagerkalotte 16 dargestellt, die in das Tragteil eingelegt wird. Zwischen dem Flansch 13 und der Lagerkalotte 16 ist eine Kontaktfeder 17 eingelegt, die einerseits unterhalb des Flansches 13 einen galvanischen Kontakt zum Blech des Trommelbodens 8 hat und am anderen Ende als Stützpfanne 18 ausgebildet ist. Zwischen diese Stützpfanne 18 und einer sich auf dem Grund eines Sackloches, das koaxial im Lagerzapfen 3 angeordnet ist, abstützenden Feder 19 ist ein Kontaktstift 20 eingespannt, der schließlich die galvanische Verbindung vom Trommelboden über die Kontaktfeder 17 und die Stützfeder 19 zum Zapfen 3 herstellt. Die Montage der Teile der Lagerschale 9 gleicht derjenigen aus Figur 1 mit dem Unterschied der zusätzlichen Einlage der Lagerkalotte 16 und der Stützfeder 19.

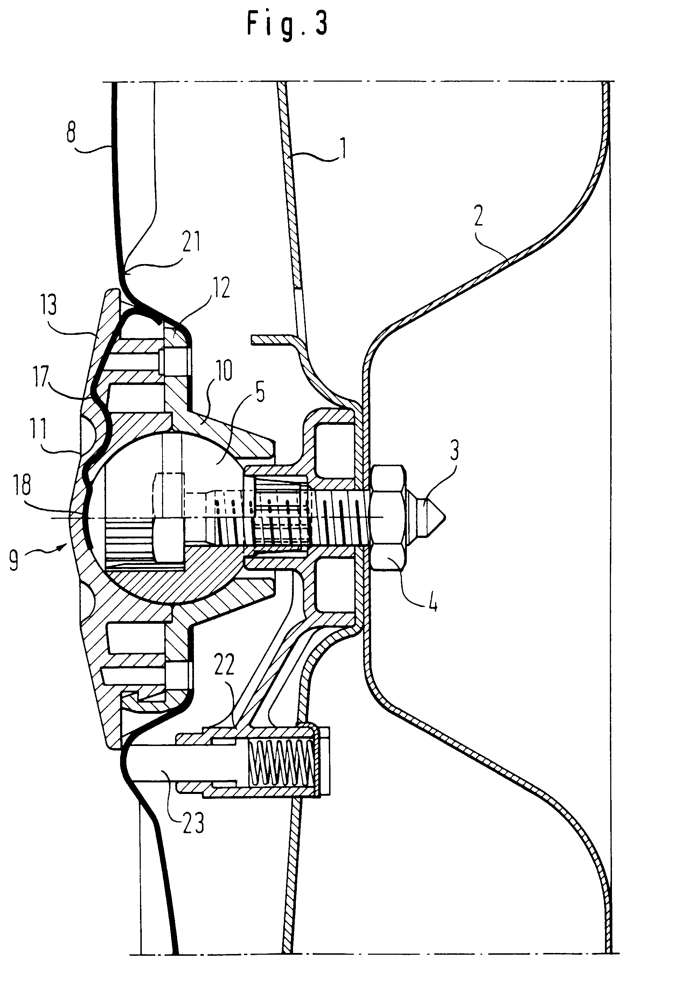

Bei dem in Figur 3 dargestellten Ausführungsbeispiel sind zwei Varianten für die Herstellung der galvanischen Verbindung vom Trommelboden 8 zu den Gehäuseblechen angedeutet. Die eine Variante baut auf der in Figur 2 dargestellten auf und besteht einerseits aus einer Kontaktfeder 17 mit Stützwanne 18, die beide in dem trommeleinwärts angeordneten Teil 11 der Lagerschale 9 eingebettet sind. Die Stützpfanne 18 arbeitet dabei in gleicher Weise wie bei Figur 2 (in Figur 3 jedoch nicht dargestellt) mit einem Kontaktstift 20 zusammen, um die galvanische Verbindung zu den Gehäuseteilen herzustellen.

Die andere Variante für die galvanische Verbindung besteht darin, daß der Trommelboden 8 auf einer Ringlinie um die topfförmige Vertiefung des Trommelbodens 8 eine ringförmige Kontaktbahn 21 aufweist, die mit einem seitlich am Befestigungsteil 22 des Lagerzapfens 3 geführten und gefederten Kontaktstift 23 in ständiger galvanischer Verbindung steht.

## Patentansprüche

1. Wäschetrockner mit wenigstens annähernd horizontal drehbar gelagerter Wäschetrommel, deren wenigstens einer Trommelboden (8) über einen an der mit dem Gehäuse des Wäschetrockners verbundenen Rückwand (1) befestigten Lagerzapfen (3, 5) gelagert ist, dessen lagerrelevante Fläche (6) eine Kugelfläche ist, und wenigstens eine die Kugelfläche (6) dicht umschmiegende Lagerschale (9) aufweist, **dadurch gekennzeichnet,** daß die Lagerschale (9) des Trommelbodens (8) zweiteilig ist, deren zum Lagerzapfen (3, 5) gerichtetes Teil (10) eine ringförmig den Zapfen (3, 5) umschließende Kugelringfläche bildet und über ringförmige Flansche (12, 13) an beiden Teilen (10, 11) mit dem trommeleinwärts gerichteten Teil (11) und zugleich mit dem Trommelboden (8) verbunden ist, und daß die Kugelfläche (6) zusammen mit dem Lagerzapfen (3, 5) durch die Lagerschalen-Teile (10, 11) am Trommelboden (8) gehalten sind.

2. Wäschetrockner nach Anspruch 1, dadurch gekennzeichnet, daß die Trommel auf der dem Boden (8) gegenüberliegenden Seite ein Lager aufweist, das auch axiale Kräfte aus der Richtung des Kugelkalottenlagers (3, 5, 9) des Bodens (8) aufnimmt.

3. Wäschetrockner nach Anspruch 1 oder 2, dadurch gekennzeichnet, daß die Verbindung der Flansche (12, 13) miteinander und mit dem Trommelboden (8) stiftartige Verbindungselemente (Niete, Schrauben oder dgl.) (14) umfaßt.

4. Wäschetrockner nach Anspruch 3, dadurch gekennzeichnet, daß die Verbindungselemente (14) eine Ringscheibe (15) am Flansch (12) des zum Lagerzapfen (3, 5) gerichteten Teils (10) befestigen, die im Schleifkontakt mit einer mit dem Lagerzapfen (3) verbundenen Kontakffeder (7) steht.

5. Wäschetrockner nach einem der Ansprüche 1 bis 4, dadurch gekennzeichnet, daß in den Flansch (13) des trommeleinwärts angeordneten Teils (11) eine Kontakffeder (17) eingebaut ist, die einerseits mit dem Trommelboden (8) und andererseits mit einem Kontaktstift (20) galvanische Verbindung hat, der mittels einer Feder (19) zwischen dem Grund eines im Zapfen (3) koaxial angeordneten metallischen Sacklochs und einer Stützwanne (18) der Kontakffeder (17) eingespannt ist.

6. Wäschetrockner nach einem der Ansprüche 1 bis 4, dadurch gekennzeichnet, daß mit dem Lagerzapfen (3, 5) eine Kontaktstift-Führung (22) fest verbunden ist, deren federbelasteter Kontaktstift (23) auf einer Kreisbahn (21) außerhalb des Flansches (12) des zum Lagerzapfen (3) gerichteten Teils (10) mit dem Trommelboden (8) galvanischen Kontakt hat.

## Claims

1. Laundry drier with a laundry drum, which is rotatably mounted at least approximately horizontally and the at least one drum base (8) of which is mounted by way of a bearing pin (3, 5), which is fastened to the back wall (1) connected with the housing of the laundry drier and the surface (6) of which relevant for mounting is a ball surface, and at least one bearing shell (9) tightly embracing around the ball surface (6), characterised thereby that the bearing shell (9) of the drum base (8) is two-part, the part (10) of which directed towards the bearing pin (3, 5) forms a spherical annular surface annularly enclosing the pin (3, 5) and is connected by way of annular flanges (12, 13) at both parts (10, 11 ) with the part (11), which is directed inwardly of the drum, and at the same time with the drum base (8), and that the ball surface (6) together with the bearing pin (3, 5) is held by the bearing shell parts (10, 11 ) at the drum base (8).

2. Laundry drier according to claim 1, characterised thereby that the drum has, on the side opposite the base (8), a bearing which also accepts axial forces from the direction of the ball and cup bearing (3, 5, 9) of the base (8).

3. Laundry drier according to claim 1 or 2, characterised thereby that the connection of the flanges (12, 13) with each other and with the drum base (8) comprises pin-like connecting elements (rivets, screws or the like) (14).

4. Laundry drier according to claim 3, characterised thereby that the connecting elements (14) fasten an annular disc (15) to the flange (12) of the part (10) directed towards the bearing pin (3, 5), which annular disc stands in wiping contact with a contact spring (7) connected with the bearing pin (3).

5. Laundry drier according to one of the claims 1 to 4, characterised thereby that installed in the flange (13) of the part (11) arranged inwardly of the drum is a contact spring (17), which has electrically conductive connection on the one hand with the drum base (8) and on the other hand with a contact pin (20), which is restrained by means of a spring (19) between the base of a metallic blind hole, which is coaxially arranged in the pin (3), and a support dish (18) of the contact spring (17).

6. Laundry drier according to one of the claims 1 to 4, characterised thereby that firmly connected with the bearing pin (3, 5) is a contact pin guide (22), the spring-loaded contact pin (23) of which has electrically conductive contact with the drum base (8) on a circular path (21) outside the flange (12) of the part (10) directed towards the bearing pin (3).

## Revendications

1. Sèche-linge avec tambour à roulement tournant au moins quasi horizontalement dont au moins un fond du tambour (8) est logé au moyen d'un tourillon (3, 5) fixé à la paroi arrière (1) reliée au carter du sèche-linge, dont la surface (6) importante pour le roulement est une surface sphérique, et qui présente au moins une coquille de roulement (9) qui enveloppe à proximité la surface sphérique (6), caractérisée en ce que la coquille de roulement (9) du fond du tambour (8) est en deux parties, dont la partie (10) orientée vers le tourillon (3, 5) forme une surface d'anneau de sphère entourant le tourillon (3, 5) à la manière d'un anneau et est reliée à l'aide de flasques annulaires (12, 13) sur les deux parties (10,11) avec la partie (11) orientée vers l'intérieur du tambour ainsi qu'avec le fond du tambour (8), et en ce que la surface sphérique (6) est maintenue ensemble avec le tourillon (3, 5) au fond du tambour (8) par les parties des coquilles de roulement (10, 11).

2. Sèche-linge selon la revendication 1, caractérisé en ce que le tambour est muni, du côté opposé au fond (8), d'un roulement qui absorbe aussi les forces axiales de la direction du roulement à calotte sphérique (3, 5, 9) du fond (8).

3. Sèche-linge selon la revendication 1 ou 2, caractérisé en ce que la liaison des flasques (12, 13) entre eux et avec le fond du tambour (8) comporte des éléments de liaison analogues à des chevilles (rivets, vis, etc.) (14).

4. Sèche-linge selon la revendication 3, caractérisé en ce que les éléments de liaison (14) fixent une rondelle annulaire (15) au flasque (12) de la partie (10) orientée vers le tourillon (3, 5) qui est en contact par frottement avec un ressort de contact (7) relié au tourillon (3).

5. Sèche-linge selon l'une des revendications 1 à 4, caractérisé en ce que le flasque (13) de la partie (11) disposée vers l'intérieur du tambour comporte un ressort de contact (17) qui est en contact galvanique, d'un côté, avec le fond du tambour (8) et, de l'autre, avec une cheville de contact (20) encastrée par un ressort (19) entre la base d'un trou borgne métallique disposé coaxialement dans le tourillon (3) et une cavité d'appui (18) du ressort de contact (17).

6. Sèche-linge selon l'une des revendications 1 à 4, caractérisé en ce qu'un guidage de cheville de contact (22) est relié solidement au tourillon (3,5), dont la cheville de contact (23) activée par ressort est en contact galvanique avec le fond du tambour (8) sur une trajectoire circulaire (21) située en dehors du flasque (12) de la partie (10) orientée vers le tourillon (3).
